**Europäisches Patentamt**

**European Patent Office**

**Office européen des brevets**

(11) Veröffentlichungsnummer: **0 025 459**
**B1**

(12) **EUROPÄISCHE PATENTSCHRIFT**

(45) Veröffentlichungstag der Patentschrift: **30.01.85**

(21) Anmeldenummer: **79103504.1**

(22) Anmeldetag: **18.09.79**

(51) Int. Cl.⁴: **F 16 F 1/38, B 60 K 5/12**

(54) **Gummi-Metall-Parallelschublager.**

(43) Veröffentlichungstag der Anmeldung:
**25.03.81 Patentblatt 81/12**

(45) Bekanntmachung des Hinweises
auf die Patenterteilung:
**30.01.85 Patentblatt 85/05**

(84) Benannte Vertragsstaaten:
**DE FR GB IT**

(56) Entgegenhaltungen:
**DE-A-1 931 940**
**DE-A-2 337 872**
**DE-A-2 755 117**
**US-A-3 955 808**

(73) Patentinhaber: **Jörn, Frieda**
**Porschestrasse 10**
**D-7012 Fellbach (DE)**

(72) Erfinder: **Jörn, Raoul**
**(verstorben)**
**D-8992 Hengnau (DE)**

(74) Vertreter: **Neubauer, Hans-Jürgen, Dipl.-Phys.**
**Fauststrasse 30**
**D-8070 Ingolstadt (DE)**

Courier Press, Leamington Spa, England.

## Beschreibung

Die Erfindung betrifft ein Gummi-Metall-Parallelschublager, insbesondere zur Aufhängung von Motoren und/oder des Differentialgetriebes in Fahrzeugen, bestehend aus einem Gummi-Metall-Element mit einem inneren, die Bohrung für den Befestigungsbolzen des zu lagernden Teils enthaltenden parallelflächigen Metallquaders, zwei an einander gegenüberliegenden Flächen des Metallquaders anvulkanisierten Gummikörpern mit parallel zu den Quaderflächen verlaufenden Außenflächen, sowie einem das Gummi-Metall-Element einschließenden Gehäuse.

Bei einem aus der Zeitschrift "MTZ", 1968 Heft 6, Seite 252 bekannten Parallelschublager dieser Art sind die beiden, an einander gegenüberliegenden Seiten eines Bleches angeordneten Gummikörper zur Bildung des Lagers an den Innenflächen des von einem metallischen U-Bügel gebildeten Gehäuses anvulkanisiert, so daß Metallquader, Gummikörper und Gehäuse eine materialschlüssige Einheit bilden. Diese bekannten Gummi-Metall-Parallelschublager haben sich nicht bewährt, da infolge von Materialschrumpfung nach der Vulkanisation Zugvorspannungen in den Gummielementen entstehen, denen eine Biegespannung der Betriebsbelastung überlagert wird. Ferner tritt beim Beschleunigen und Verzögern eine Erhöhung der Zugspannungen ein, die aufgrund der Volumenbeständigkeit des Gummis zu starken, in Randeinschnürungen zum Ausdruck kommenden Verformungen der Gummikörper führen und nach verhältnismäßig kurzer Zeit ein Einreißen und damit Zerstören des Lagers in diesen Bereichen zur Folge haben. Diese Wirkung der bekannten Parallelschublager wurde noch dadurch verstärkt, daß die größten Zug- und Biegekräfte in den Randbereichen, d.h. gerade in den Zonen der herstellungsbedingt geringsten Haftung zwischen den Gummi- und Metallteilen der Gummielemente wirksam werden.

Aus den vorstehend genannten Gründen finden Parallelschublager heute in den genannten Bereichen keine Anwendung mehr, es werden vielmehr heute zur Lagerung von Kraftfahrzeug-, Schiffs- und Lokomotivantrieben ausschließlich die beispielsweise aus der DE—A—19 31 940 bekanntgewordenen Keillager eingesetzt, die aus einem keilförmig ausgebildeten Metallinnenteil und einem entsprechend trogartig ausgebildeten Gehäuse bestehen, die mittels jeweils eines beidflächig anvulkanisierten Gummikörpers zu einer materialschlüssigen Einheit verbunden sind. In dem so ausgebildeten Lager verursachen die Auflagerkräfte senkrecht auf die Gehäusewand wirkende Druckkomponenten und parallel zur Gehäusewand wirkende Schubkomponenten im Gummi, wobei einerseits die durch die materialübliche Schrumpfung des Gummis nach dem Aufvulkanisieren hervorgerufenen Zugspannungen ausgeglichen werden, insbesondere jedoch das Auftreten übermäßiger Zug- und Biegespannungen in Abhängigkeit von der Betriebsbelastung vermieden wird. In bezug auf ihre Standzeit haben sich diese Lager daher bestens bewährt, ihr Nachteil ist jedoch, daß sie einerseits einen großen Einbauraum, teure Metallteile und aufwendige Vulkanisierformen erfordern, die für jeden Lagertyp neu gefertigt werden müssen, da das Gehäuse zum Zwecke der Anvulkanisation des Gummiteils mit in die Vulkanisierform eingelegt und dieser daher eine der speziellen Gehäuseform angepaßte Gestaltung aufweisen muß. Ein weiterer Nachteil besteht auch darin, daß Keillager außerordentlich anfällig gegen vertikal nach oben gerichtete Kräfte sind. Die in dieser Belastungsrichtung wirkenden Kräfte führen in ähnlicher, noch verstärkter Form wie in den eingangs beschriebenen Parallelschublagern zu Zugspannungen im Gummikörper mit hohen Spannungsspitzen gerade an den besonders anfälligen Hafträndern mit denselben, eingangs beschriebenen Folgen.

Ein weiterer Nachteil der Keillager ist auch darin zu sehen, daß die systembedingt erwünschte Druckspannung die Schwingungsdämpfung und Geräuschisolierung in einem beachtlichen Umfang herabsetzt.

Es sind weiterhin beispielsweise aus der US—A—3 955 808 Motorlager bekannt, bei denen zwei Keillager der vorstehend beschriebenen Art gegeneinander vorgespannt angeordnet sind, so daß je nach Richtung der vertikalen Belastung nach oben oder unten jeweils nur ein Lagerteil beansprucht und das andere entlastet wird. Auf diese Weise können zwar nachteilige Zugspannungen vermieden werden, ihre Herstellung benötigt jedoch einen erhöhten Aufwand bei gleichzeitiger Vergrößerung der Einbaumaße zumindest in einer Richtung, wobei als weiterer Nachteil die Befestigung der Motorpratze nur seitlich am inneren Metallteil möglich ist mit der Folge, daß der Motor zum Zwecke der Montage am Fahrzeug nicht von oben her aufgesetzt werden kann.

Ziel der vorliegenden Erfindung ist die Schaffung eines elastischen Motorlagers, das bei einfachster und äußerst wirtschaftlicher Herstellung eine hohe Dauerstand- und Wechselfestigkeit besitzt, das ferner eine besonders gute Schwingungs- und Geräuschisolation bewirkt und damit einen hohen, Fahrzeug und Ladegut schonenden Fahrkomfort bringt. Die Erfindung besteht, ausgehend von einem Parallelschublager der eingangs beschriebenen Art darin, daß der Metallquader und/oder die äußeren Platten mit einer zum Gummikörper hin weisenden Flächenverdickung oder Flächenprägung versehen sind und die in der Wirkungsrichtung der Auflagerlast gemessene Länge der Gummikörper mindestens dem 2,2-fachen ihrer Dicke zwischen den Haftflächen entspricht, wobei das Gummi-Metall-Element durch Einspannen zwischen den parallelen Außenflächen der Metallplatten kraftschlüssig in einem an wenigstens einer Seite offenen Gehäuse mit einer dauerhaft wirkenden Einspannkraft gehalten ist, die mindestens der statischen, parallel zu den Außenflächen wirkenden Auflagerlast des gelagerten Teils entspricht.

Durch die Erfindung ist ein höchsten Anforderungen an ein elastisches Motorlager genügendes Gummi-Metall-Parallelschublager geschaffen, bei dem ein wesentlicher Vorteil in der gehäuseunabhängigen Herstellbarkeit des Gummi-Metall-Elements als selbständiges Bauteil besteht. Dadurch wird nicht nur die Vulkanisierform vereinfacht und verbilligt, sondern es wird auch möglich, ein und dasselbe Lagerelement, d.h. das Vulkanisierteil, für die verschiedensten in annähernd gleicher Größenordnung liegenden Motorentypen zu verwenden, indem man jeweils ein anderes, dem Einbaufall angepaßtes Gehäuse zur Anwendung bringt. Mit wenigen standardisierten Vulkanisierteilen kann durch Benutzung verschiedener Gehäusevarianten eine große Anzahl von Fahrzeugtypen ausgerüstet werden. Da die Vulkanisierformen aus massivem Stahl bestehen und daher lange Fertigungszeit und hohe Herstellungskosten erfordern, ist die Verwendung schon vorhandener Standard-Vulkanisierteile, besonders bei der Entwicklung neuer Kraftfahrzeugtypen äußerst vorteilhaft, während Lagergehäuse schnell herstellstellbar sind. Das erfindungsgemäße Motorlager bietet daher hinsichtlich der Produktion und der Lagerhaltung erhebliche wirtschaftliche Vorteile.

Die getrennte Herstellung von Gummi-Metall-Element und Gehäuse hat den weiteren besonderen Vorteil, daß die für die Wechselfestigkeit maßgebliche Druckvorspannung erst beim Einpressen in das Gehäuse aufgebracht wird zum Unterschied zu bekannten, in einem Stück gefertigten Lagern.

Die erfindungsgemäß vorgesehene Druckvorspannung soll auf beiden Seiten des Gummikörpers mindestens der statischen Auflagerlast entsprechen. Hierdurch werden beim Auftreten von Massenkräften durch Bremsverzögerung, die in Fahrtrichtung, also senkrecht zu den Haftflächen gerichtet sind, Zugspannungen vermieden, denn die Kräfte durch Bremsverzögerung sind stets kleiner als die vertikale Auflagerkraft, bedingt durch die größtmögliche Reibungsziffer zwischen Rad und Straße in Größe der einfachen Erdbeschleunigung.

Schließlich wird durch die Bemessung der in der Wirkungsrichtung der Auflagerkraft gemessene Länge der Gummikörper mindestens mit dem 2,2-fachen ihrer Dicke zwischen den Haftflächen erreicht, daß die bei Schubbeanspruchung unvermeidbar auftretenden zusätzlichen Biegespannungen auf ein Minimum beschränkt werden. Bei dieser erfindungsgemäß vorgesehenen Dimensionierung beträgt der Biegeanteil 10% der Verformung. Dieser Wert sollte nicht überschritten werden, da bei größerem Biegeanteil das Kraft-Weg-Diagramm degressiv verläuft und außerdem an den Hafträndern Zugbeanspruchungen mit hohen Spitzenwerten auftreten. Dies gilt in gleicher Weise für nach oben und nach unten gerichtete Kräfte.

Das erfindungsgemäße Lager zeigt sowohl hinsichtlich der Schwingungsals auch der Geräuschisolierung optimale Eigenschaften. Bei stehenden und liegenden Reihenmotoren gerade und ungerader Zylinderzahl sowie bei V-Motoren wirken alle schwingungserregenden Kräfte annähernd senkrecht zur Hauptträgheitsachse. Auch die durch umlaufende Massen erregten Längsdrehschwingungen rufen Schwingungssausschläge um die Hauptträgheitsachse hervor, die in einer senkrecht dazu verlaufenden Ebene liegen. Da die Gummikörper ebenfalls in einer senkrecht zur Hauptträgheitsachse liegenden Ebene angeordnet sind, werden sie ausschließlich auf Schub beansprucht. Sie haben daher in allen Richtungen die kleinstmögliche Federkonstante, so daß die Eigenfrequenzen der elastisch gelagerten Motormasse den niedrigstmöglichen Wert annehmen und eine optimale Schwingungs- und Geräuschisolierung erreicht wird. Wesentlich ist auch für die Ausbildung als reines Schublager, daß hohe Kräfte der in der der Auflagerlast entgegengesetzten Richtung aufgenommen werden können, die bei modernen Motoren als Reaktionskräfte der hohen Drehmomente auftreten. Durch die Vergrösserung der Gummidicke in der rundumlaufenden Randzone gegenüber der Innenzone wird darüberhinaus ein erheblicher Spannungsabbau erzielt, da die Schubspannungen umgekehrt proportional dem Abstand der gegenüber liegenden Metallflächen abnehmen. Weiterhin kann durch Veränderung der Stärke der Verdickungen bzw. Prägungen in weiten Grenzen ohne Veränderung des Außenmaßes die Federkennung verändert werden, so daß durch Wahl der Gummihärte in Verbindung mit der Gestaltung der Flächenverdickung des Metallquaders und/oder der Platten aus der gleichen Vulkanisierform Lager mit in weiten Bereichen veränderlichen und dem Bedarfsfall angepaßten Federkonstanten hergestellt werden können. Es können weiterhin die Metallplatten auf ihren Außenflächen mit einer dünnen Gummischicht bei gegebenenfalls Ausfüllung des durch eine Flächeneinprägung gebildeten Raumes versehen sein, wodurch eine bessere Haftreibung gegenüber dem sich um das Gummi-Metall-Element spannenden Rahmen erzielt wird.

Vorteilhaft ist das Gummi-Metall-Element mit elastischen Anschlägen versehen, welche übermäßige Bewegungen des elastisch aufgehängten Motors nach unten, oben und zur Seite infolge starker Fahrstöße oder hohem Drehmoment begrenzen. Dazu ist der Metallquader vorteilhaft an seinen von den Gummikörpern begrenzten Freiflächen mit einer rundumlaufenden Nut versehen und in die Nutausnehmung sind mit beidseitigem Seitenabstand zu den Nuträndern Anschlagleisten einvulkanisiert. Hierbei können die Nutausnehmungen eine sich keilförmig aufweitende und die Anschlagleisten eine sich gegenläufig keilförmig verjüngende Form aufweisen. Durch die gegenläufig konische Ausbildung der Nutausnehmungen und der Anschlagleisten ergeben sich optimale Federungsbedingungen im Anschlagbereich dadurch, daß zu Beginn des Anschlagvorganges die Kräfte weich aufgenommen werden unter zunehmender Verdrängung des (volumenbeständigen) Gummis in die durch den Seitenabstand zum Nutrand gebildeten Freiräume, wobei mit zunehmender Ausfüllung dieser Freiräume eine zunehmende Erhöhung der Federkraft eintritt. Zur Verstärkung dieser Wirkung können die Anschlagleisten aus einem Gummi größerer Härte und/oder höherer Dämpfung als die tragenden Gummikörper bestehen.

Die Anschlagleisten können beispielsweise für den Fall, daß als Federwegbegrenzung ein äußerer Anschlag vorgesehen ist, über die Außenkontur des Metallquaders hinausragen. Es können die den Federweg begrenzenden Anschläge jedoch am Gehäuse angeordnet sein etwa in Form von nach innen ragenden Vorsprüngen am Gehäuse, die in entsprechende Schlitzausnehmungen des Metallquaders eingreifen und so im Zusammenwirken mit den Anschlagleisten als Federwegbegrenzung wirken. In diesen Fällen ist eine Dimensionierung der Anschlagleisten als innere, d.h. nicht über die Außenkontur hinausragende Anschlagleisten möglich.

Das erfindungsgemäße Lager läßt eine beliebige Gestaltung des Gehäuses nach Material, Formgebung, Anbringung der Befestigungsflansche entsprechend den jeweils geforderten Einbaumaßnamen und Einbaubedingungen zu. So kann in einer besonders einfachen Ausführungsform das Gehäuse aus einem entsprechend längendimensionierten Abschnitt eines handelsüblichen gezogenen Vierkantrohres bestehen, in das das Gummi-Metall-Element eingepreßt ist, und an das an beliebiger Stelle Befestigungsflansche angeschweißt sein können.

Die vorbeschriebene Ausführungsform kann erfindungsgemäß weiterhin dadurch vereinfacht werden, daß die Seitenwände des Gehäuses gegenüber den seitlichen freien Flächen der Gummikörper mit Einpressungen als Begrenzungsanschläge versehen sind. Diese Gehäuseausbildung macht einen Seitenanschlag am mittleren Metallquader überflüssig, und dieser kann daher äußerst schmal und leicht ausgebildet werden.

Es kann weiterhin zur Bildung des Lagers das Gummi-Metall-Element in eine in den Tragrahmen, etwa in das Fahrgestell eines Fahrzeuges, fest integrierte, als Gehäuse wirkende Ausnehmung eingebracht werden, wobei lediglich durch Dimensionierung und entsprechendes Zusammenpressen vor dem Einbringen die dauerhafte Erhaltung der erforderlichen Vorspannung sichergestellt werden muß. Selbstverständlich kann eine derartige Fahrgestellausnehmung auch zur Aufnahme eines Lagers in einer der beiden zuletzt beschriebenen Ausführungsformen dienen, in welchem Falle die Ausnehmung jedoch nicht als Spanngehäuse sondern lediglich als Aufnahme dient, so daß das Lager lediglich einer Sicherung gegen ungewolltes Verschieben beispielsweise durch Verschrauben gegen das Gestell bedarf.

Die Erfindung ist in der Zeichnung durch einige Ausführungsbeispiele erläutert. Es zeigen

Fig. 1 einen Schnitt durch das Gummi-Metall-Element eines Lagers gemäß Erfindung

Fig. 2 einen Schnitt nach II—II durch Fig. 1

Fig. 3 einen Schnitt nach III—III durch Fig. 1

Fig. 4 eine Seitenansicht auf das in den Fig. 1 bis 3 wiedergegebene Gummi-Metall-Element nach Einbau in das Gehäuse zur Bildung eines Lagers für einen Motor mit oben angreifender Pratze

Fig. 5 einen Schnitt nach V—V durch Fig. 4

Fig. 6 eine andere Ausführungsform eines Lagers zur Lagerung eines Motors mit von der Seite angreifender Pratze in Vorderansicht

Fig. 7 einen Schnitt nach VII—VII durch Fig. 6

Fig. 8 eine andere Ausführungsform eines erfindungsgemäßen Lagers

Fig. 9 einen Schnitt nach IX—IX durch Fig. 8

Fig. 10 einen Schnitt nach X—X durch Fig. 8

Fig. 11 eine teilgeschnittene Seitenansicht auf eine weitere Ausführungsform eines Lagers

Fig. 12 eine Sicht von oben auf Fig. 11

Fig. 13 ein Lager mit einer als Gehäuse wirkenden Ausnehmung am Vorderachs-Hilfsträger

Fig. 14 eine Sicht von oben auf Fig. 13.

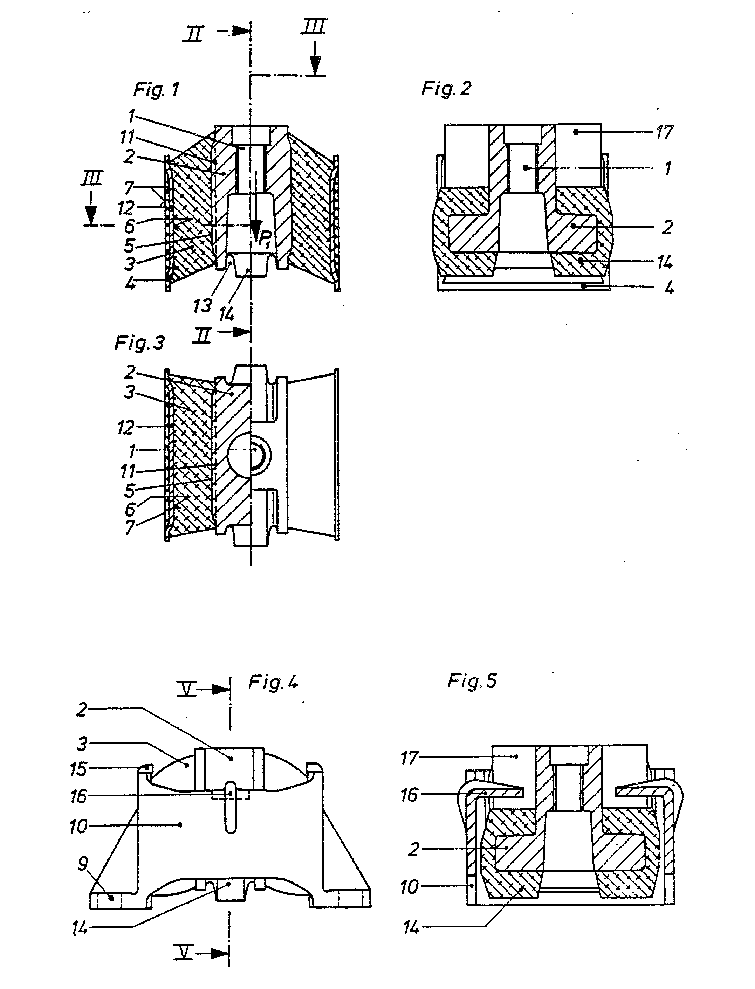

Das in der Zeichnung dargestellte Gummi-Metall-Parallelschublager besteht aus einem Gummi-Metall-Element mit einem inneren, die Lagerbohrung 1 für das zu lagernde Teil enthaltenden parallelflächigen Metallquader 2, zwei an einander gegenüberliegenden Flächen des Metallquaders anvulkanisierten Gummikörpern 3 mit parallel zu den Quaderflächen verlaufenden Außenflächen 5, 6, sowie einem das Gummi-Metall-Element 2, 3 einschließenden Gehäuse. Es sind—siehe Fig. 1 bis 5— der Metallquader 2 und die äußeren Platten 4 mit einer zum Gummikörper hin weisenden Flächenverdickung 11 oder Flächenprägung 12 versehen. Es entspricht weiterhin die in der Wirkungsrichtung P1 der Auflagerlast gemessene Länge der Gummikörper 3 mindestens dem 2,2-fachen ihrer Dicke zwischen den Haftflächen 5, 6, wobei das Gummi-Metall-Element durch Einspannen zwischen den parallelen Außenflächen der Metallplatten 4 kraftschlüssig in einem an wenigstens einer Seite offenen Gehäuse 10 mit einer dauerhaft wirkenden Einspannkraft gehalten ist, die mindestens der statischen, parallel zu den Außenflächen wirkenden Auflagerlast des gelagerten Teils entspricht. Hierbei wird durch die gegen den Gummikörper weisenden Flächenverdickung 11 bzw. Flächenprägung 12 versehen derart, daß die Gummikörper 3 in ihren inneren Flächenbereichen eine geringere Dicke als in ihren rundumlaufenden Randzonen aufweisen, wodurch infolge der Vergrößerung der Gummidicke in der rundumlaufenden Randzone gegenüber der Innenzone ein erheblicher Spannungsabbau erzielt wird. Es sind weiterhin die Metallplatten auf ihren Außenflächen mit einer dünnen Gummischicht bei Ausfüllung des durch die Flächeneinprägung gebildeten Raumes versehen, wodurch eine bessere Haftreibung gegenüber dem sich um das Gummi-Metall-Element spannenden Gehäuse erzielt wird.

Das Gummi-Metall-Element ist mit die Federwege in allen Richtungen begrenzenden Anschlägen versehen, wozu der Metallquader 2 an seinen von den Gummikörpern begrenzten Freiflächen mit einer rundumlaufenden Nut 13 versehen ist und in die Nutausnehmung mit beidseitigem Seitenabstand zu den Nuträndern Anschlagleisten einvulkanisiert sind. Die Nutausnehmungen 13 weisen eine sich keilförmig aufweitende und die Anschlagleisten 14 eine sich gegenläufig keilförmig verjüngende Form auf. Die Anschlagleisten 14 ragen—siehe Fig. 3—über die Außenkontur des Metallquaders hinaus, wobei in diesen Richtungen des Gehäuse selbst den Gegenanschlag bildet. Zur Begrenzung der nach oben gerichteten Federanschläge sind—siehe Fig. 4 und 5—nach innen ragende Vorsprünge am Gehäuse 10 vorgesehen, die in Schlitzausnehmungen 17 des Metallquaders 2 eingreifen und als Federwegbegrenzung wirken. Die Vorsprünge 15 übergreifen die Metallplatten spielfrei und sichern diese gegen ein Herausschieben nach oben.

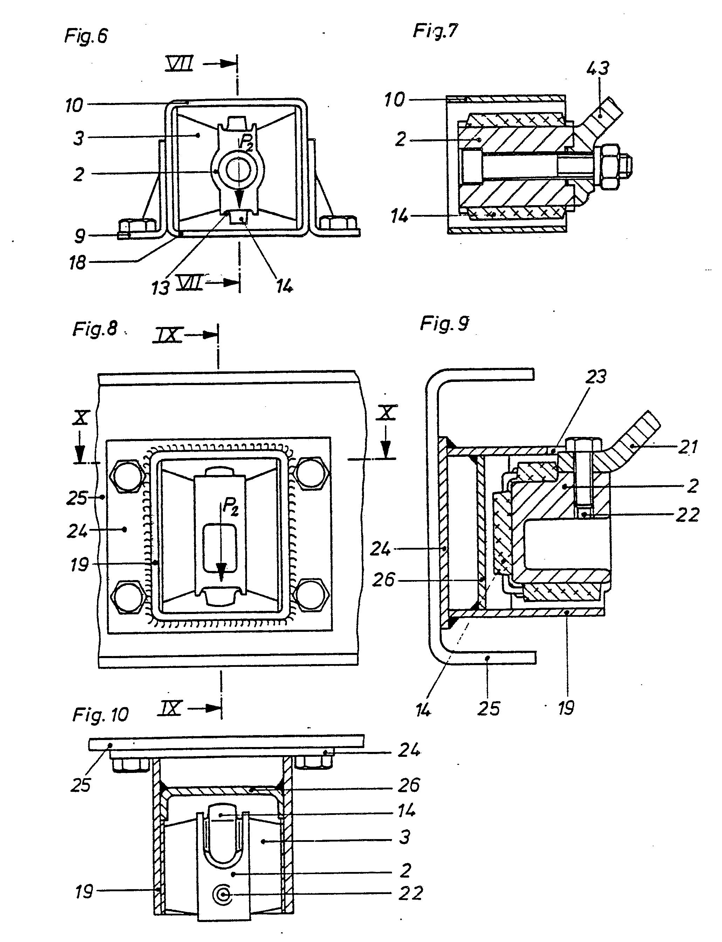

Das erfindungsgemäße Lager läßt eine beliebige Gestaltung des Gehäuses nach Material, Formgebung und Anbringung der Befestigungsflansche und der Gehäuseöffnung entsprechend den jeweils geforderten Einbaumaßen und Einbaubedingungen zu. So kann in einer besonders einfachen Ausführungsform—siehe Fig. 6 bis 10, 11, 12—das Gehäuse aus einem entsprechend längendimensionierten Abschnitt eines handelsüblichen gezogenen Vierkantrohres 18, 19, 20 bestehen, in das das Gummi-Metall-Element 2, 3, 4 eingepreßt ist, und das in beliebiger Lage eingebaut werden und je nach Einbaubedingungen an unterschiedlicher Stelle mit einer Anschraubbohrung zur Befestigung des zu lagernden Teiles am Fahrzeugrahmen versehen sein kann.

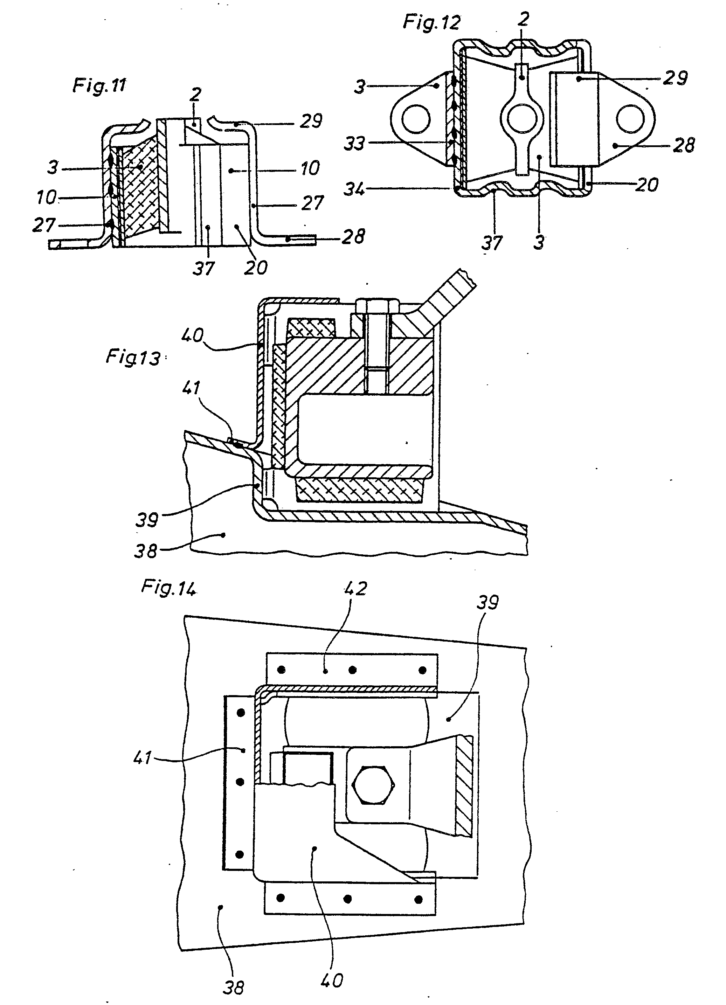

Bei der in den Fig. 4 und 5 wiedergegebenen Ausführungsform ist das Gehäuse 10 in der Ebene der unteren zum Einschieben des Vulkanisierteiles bestimmten Gehäuseöffnung mit einem Befestigungsflansch 9 versehen, wobei das Lager durch die Auflagerlast des gelagerten Motors in der in Fig. 1 durch Pfeil P1 bezeichneten Axialrichtung belastet wird, während in der in den Fig. 6 und 7 wiedergegebenen Ausführungsform die durch Pfeil P2 bezeichnete Auflagerlast zwar ebenfalls vertikal, aber quer zur Axialrichtung des hochkant gestellten Gehäuses verläuft. Hierbei wird die Belastung durch das Motorgewicht über eine seitlich angreifende Pratze 43 und einen horizontalen Bolzen eingeleitet, während bei dem Lager nach Fig. 8 bis 10 die Lastaufnahme über eine von oben aufgesetzte Pratze 21 erfolgt, wozu der Metallquader 2 zur Einbringung der Anschraubbohrung 22 nach oben auskragt und das Gehäuse nach oben mit einer entsprechenden Ausnehmung 23 versehen ist. Zur Befestigung der Lager nach Fig. 6 und 7 ist das Gehäuse 18 mit Befestigungsflanschen 9 zur Befestigung an einer horizontalen Bodenplatte versehen, während das Gehäuse 19 in Fig. 8 bis 10 eine die hintere Öffnung verschließende Anschraubplatte 24 zur Verschraubung gegen eine vertikale Wand 25 aufweist. Im Gehäuse 19 ist weiterhin eine Anschlagplatte 26 zur seitlichen Ausschlagbegrenzung in Verbindung mit der Anschlagleiste 14 vogesehen. Das in den Fig. 11 und 12 wiedergegebene Lager entspricht im Aufbauprinzip dem in Fig. 4 und 5 wiedergegebenen Lager, wobei lediglich am Gehäuse 10 Blechstreifen angeschweißt sind, die auf der einen Seite zu Befestigungsflanschen 28 und auf der anderen Seite zu die Gummikörper 3 übergreifenden oberen Anschlägen 29 abgebogen sind. Die Seitenwände des Gehäuseteiles 20 weisen Eindrückungen 37 auf, die als seitliche Anschläge für die Gummikörper 3 dienen.

Nach Fig. 13 und 14 ist ein erfindungsgemäßes Vulkanisierteil, wie es in den Fig. 8, 9 und 10 gezeigt wurde, ohne ein weiteres Außengehäuse in dem von der Vertiefung 39 im Vorderachshilfsrahmen 38 eines PKW und einer aufgeschweißten Haube 40 gebildeten Hohlraum mit einer der statischen Belastung des Motorlagers entsprechenden Vorspannung eingedrückt und dort durch Haftreibung und Anschlag an den äußeren Blechkanten gehalten. Die Haube 40 ist ein Bestandteil des Hilfsrahmens 38 und ist mit ihm durch Punktschweißung an den umgebogenen Kanten 41 und 42 verbunden.

**Patentansprüche**

1. Gummi-Metall-Parallelschublager, insbesondere zur Aufhängung von Motoren und/oder des Differentialgetriebes in Fahrzeugen, bestehend aus einem Gummi-Metall-Element mit einem inneren die Bohrung (1) für den Befestigungsbolzen des zu lagernden Teils enthaltenden, parallelflächigen Metallquader (2), zwei an einander gegenüberliegenden Flächen des Metallquaders anvulkanisierten Gummikörpern (3) mit parallel zu den Quaderflächen verlaufenden Außenflächen, jeweils einer an den Außenflächen der Gummikörper anvulkanisierten Metallplatte sowie einem das Gummi-Metall-Element umschließenden Gehäuse (10), dadurch gekennzeichnet, daß der Metallquader (2) und/oder die äußeren Platten (4) mit einer zum Gummikörper hin weisenden Flächenverdickung (11) oder Flächenprägung (12) versehen sind und die in der Wirkungsrichtung der Auflagerlast gemessene Länge der Gummikörper (3) mindestens dem 2,2-fachen ihrer Dicke zwischen den Haftflächen (5, 6) entspricht, wobei das Gummi-Metall-Element durch Einspannen zwischen den parallelen Außenflächen der Metallplatten (4) kraftschlüssig in einem an wenigstens einer Seite offenen Gehäuse (10) mit einer dauerhaft wirkenden Einspannkraft gehalten ist, die mindestens der statischen, parallel zu den Außenflächen wirkenden Auflagerlast des gelagerten Teils entspricht.

2. Gummi-Metall-Parallelschublager nach Anspruch 1, dadurch gekennzeichnet, daß der Metallquader (2) an seinen zwischen den gummibelegten Flächen rundumlaufenden Freiflächen mit Nutausnehmungen (13) versehen ist und in den Nutausnehmungen (13) mit beidseitigem Seitenabstand zum Nutrand Anschlagleisten (14) einvulkanisiert sind.

3. Gummi-Metall-Parallelschublager nach Anspruch 2, dadurch gekennzeichnet, daß die Nutausnehmungen (13) eine sich keilförmig aufweitende und die Anschlagleisten (14) eine sich gegenläufig keilförmig verjüngende Form besitzen.

4. Gummi-Metall-Parallelschublager nach einem der Ansprüche 2 oder 3, dadurch gekennzeichnet, daß die Anschlagleisten (14) aus einem Gummi größerer Härte und/oder höherer Dämpfung als die tragenden Gummikörper (3) bestehen.

5. Gummi-Metall-Parallelschublager nach einem der Anksprüche 2 bis 4, dadurch gekennzeichnet, daß die Anschlagleisten (14) über die Außenkontur des Metallquaders (2) hinausragen und mit äußeren Federwegbegrenzungsanschlägen zusammenwirken.

6. Gummi-Metall-Parallelschublager nach einem der Ansprüche 2 bis 5, dadurch gekennzeichnet, daß das Gehäuse (10) an seinen freien Randkanten mit nach innen ragenden Vorsprüngen (15, 16) versehen ist, von denen die einen Vorsprünge (15) die Metallplatten (14) als Sicherung spielfrei übergreifen und von denen die anderen Vorsprünge (16) in entsprechende Schlitzausnehmungen (17) des Metallquaders (2) eingreifen und damit als Federwegbegrenzung und als Anschläge für die elastischen Anschlagleisten (14) dienen.

7. Gummi-Metall-Parallelschublager nach einem der Ansprüche 1 bis 6, dadurch gekennzeichnet, daß das Gehäuse aus einem längendimensionierten Abschnitt eines handelsüblichen gezogenen Vierkantrohres (18, 19, 20) besteht, in das das Gummi-Metall-Element in Längslage oder Querlage eingepreßt ist.

8. Gummi-Metall-Parallelschublager nach einem der Ansprüche 1 bis 7, dadurch gekennzeichnet, daß die Seitenwände des gegebenenfalls aus einem längsdimensionierten Abschnitt eines handelsüblichen gezogenen Vierkantrohres (20) bestehenen Gehäuses (10) gegenüber den seitlichen freien Flächen der Gummikörper (3) mit Einpressungen (37) als Begrenzungsanschläge für die Gummikörper (3) bei seitlichen Ausschlägen des mittleren Metallquaders (2) versehen sind.

9. Gummi-Metall-Parallelschublager nach einem der Ansprüche 1 bis 6, dadurch gekennzeichnet, daß das Gummi-Metall-Element in eine in den Tragrahmen (38), etwa in das Fahrgestell eines Fahrzeuges fest integrierte, als Gehäuse (39, 40) wirkende Ausnehmung eingebracht ist.

**Revendications**

1. Support en caoutchouc-métal, travaillant au cisaillement, en particulier pour la suspension de moteurs et/ou du différentiel dans des véhicules automobiles, se composant d'un élément de caoutchouc-métal qui comporte un parallélépipède de métal interne (2) à faces parallèles, contenant la forure (1) pour les boulons de fixation, deux corps de caoutchouc (3) qui sont fixés par vulcanisation sur des surfaces mutuellement opposées du parallélépipède de métal et qui présentent des surfaces extérieures s'étendant parallèlement aux surfaces du parallélépipède, et des plaques de métal fixées respectivement par vulcanisation sur les surfaces extérieures des corps de caoutchouc, ainsi que d'une boîte (10) qui enferme l'élément de caoutchouc-métal, caractérisé en ce que le prallélépipède de métal (2) et/ou les plaques extérieures (4) sont munis d'un épaississement de la surface (11) ou d'une empreinte dans la surface (12) du côté du corps de caoutchouc et en ce que la longueur des corps de caoutchouc (3), mesurée dans la direction d'action de la charge d'appui, correspond au moins à 2,2 fois leur épaisseur entre les surfaces d'adhérence (5, 6), l'élément de caoutchouc-métal étant maintenu de force, par serrage entre les surfaces extérieures parallèles des plaques de métal (4), dans une boîte (10) qui est ouverte au moins d'un côté, avec une force de serrage qui agit en permanence et qui correspond au moins à la charge d'appui statique de l'organe monté, agissant parallèlement aux surfaces extérieures.

2. Support en caoutchouc-métal travaillant au cisaillement selon la revendication 1, caractérisé en ce que le parallélépipède de métal comporte des cavités de rainure (13) sur ses surfaces libres s'etendant tout autour entre les surfaces garnies de caoutchouc, et en ce que des baguettes de butée (14) sont fixées par vulcanisation dans les cavités de rainure (13) à distance latérale des deux bords de la rainure.

3. Support en caoutchouc-métal travaillant au cisaillement selon la revendication 2, caractérisé en ce que les cavités de rainure (13) ont une forme s'évasant en coin et les baguettes de butée (14) une forme qui se resserre en coin en sens opposé.

4. Support en caoutchouc-métal travaillant au cisaillement selon la revendication 2 ou 3, caractérisé en ce que les baguettes de butée (14) sont faites d'un caoutchouc qui présente une plus grande dureté et/ou un plus fort amortissement que les corps de caoutchouc porteurs (3).

5. Support en caoutchouc-métal travaillant au cisaillement selon l'une quelconque des revendications 2 à 4, caractérisé en ce que les baguettes de butée (14) font saillie sur le contour extérieur du parallélépipède de métal (2) et coopèrent avec des butées extérieures de limitation du déplacement élastique.

6. Support en caoutchouc-métal travaillant au cisaillement selon l'une quelconque des revendications 2 à 5, caractérisé en ce que la boîte (10) est munie, sur ses arêtes bordantes libres, de saillies en relief vers l'intérieur (15, 16) parmi lesquelles les unes (15) recouvrent sans jeu les plaques de métal (4) en tant que moyens d'assujettissement, et parmi lesquelles les autres saillies (16) pénètrent dans des cavités en fente correspondantes (17) du parallélépipède de métal (2) et servent ainsi de moyens de limitation du déplacement élastique et de butées pour les baguettes de butée élastiques (14).

7. Support en caoutchouc-métal travaillant au cisaillement selon l'une quelconque des revendications 1 à 6, caractérisé en ce que la boîte est faite d'un segment dimensionné en longueur d'un tube carré étiré du type commercial (18, 19, 20), dans lequel l'élément de caoutchouc-métal est pressé en position longitudinale ou en position transversale.

8. Support en caoutchouc-métal travaillant au cisaillement selon l'une quelconque des revendications 1 à 7, caractérisé en ce que les parois latérales de la boîte (10), éventuellement faite d'un segment dimensionné en longueur d'un tube carré étiré du type commercial (20), sont munies d'empreintes (37) servant de butées de limitation pour les corps de caoutchouc (3) en cas de déplacements latéraux du parallélépipède de métal central (2), en face des surfaces latérales libres des corps de caoutchouc (3).

9. Support en caoutchouc-métal travaillant au cisaillement selon l'une quelconque des revendications 1 à 6, caractérisé en ce que l'élément de caoutchouc-métal est placé dans une cavité servant de boîte (39, 40) qui est intégrée dans le bâti porteur (38), par exemple dans le châssis d'un véhicule automobile.

**Claims**

1. Rubber-metal shear-loaded mounting, particularly for the suspension of engines and/or of the differential in vehicles, comprising a rubber-bonded metal element with an inner parallel-faced metal cuboid (2) containing the bore (1) for the mounting bolt of the part to be mounted, further comprising two rubber bodies (3) vulcanized onto opposite faces of the metal cuboid and having outer surfaces extending parallel to the faces of the cuboid, further comprising metal plates vulcanized onto each of the outer surfaces of the rubber bodies as well as a housing (10) enclosing the rubber-bonded metal element, wherein the metal cuboid (2) and the outer plates (4) are provided with a surface swelling (11) and a surface embossing (12) respectively, the latter both pointing toward the rubber body, whereby the length of the rubber bodies (3) measured in the direction of action of the bearing load corresponds to at least 2.2 times their thickness between the contact surfaces (5, 6) whereby by being clamped between the parallel outer surfaces of the metal plates (4) the rubber-bonded metal element is held non-positively with a permanently acting clamping force in a housing (10) open on at least one side, said clamping force corresponding at least to the static bearing load of the mounted part acting parallel to the outer surfaces.

2. Rubber-metal shear-loaded mounting as defined in claim 1, wherein the metal cuboid (2) is provided with grooved recesses (13) on its peripherally continuous open faces between the rubber-covered faces whereby stop strips (14) are vulcanized into the grooved recesses (13) with a clearance on either side from the edge of the groove.

3. Rubber-metal shear-loaded mounting as defined in claim 2, wherein the grooved recesses (13) have a shape which widens out in the form of a wedge while the stop strips (14) have a shape which tapers in the form of a wedge in the opposite direction.

4. Rubber-metal shear-loaded mounting as defined in any one of claims 2 and 3, wherein the stop strips (14) consist of a rubber of greater hardness and/or greater damping than the load-bearing rubber bodies (3).

5. Rubber-metal shear-loaded mounting as defined in any one of claims 2 to 4, wherein the stop strips (14) project beyond the outer contour of the metal cuboid (2) and interact with outer spring travel limiting stops.

6. Rubber-metal shear-loaded mounting as defined in any one of claims 2 to 5, wherein the housing (10) is provided on its open end edges with inward extending projections (15, 16), of which some projections (15) overlap the metal plates (14) with zero clearance in the form of a locking means and of which the other projections (16) engage corresponding slotted recesses (17) in the metal cuboid (2) and thus serve as a spring travel limiting means and as stops for the flexible stop strips (14).

7. Rubber-metal shear-loaded mounting as defined in any one of claims 1 to 6, wherein the housing consists of a length-dimensioned section of a commercially available drawn square tube (18, 19, 20) into which the rubber-bonded metal element is pressed in longitudinal or transverse position.

8. Rubber-metal shear-loaded mounting as defined in any one of claims 1 to 7, wherein the side walls of the housing (10), the latter possibly consisting of a length-dimensioned section of a commercially available drawn square tube (20), are provided with indentations (37) opposite the lateral open faces of the rubber bodies (3), said indentations serving as limiting stops for the rubber bodies (3) in the case of lateral deflections of the center metal cuboid (2).

9. Rubber-metal shear-loaded mounting as defined in any one of claims 1 to 6, wherein the rubber-bonded metal element is built into a recess, said recess acting as housing (39, 40) and being rigidly integrated into the supporting frame (38), possibly the chassis of a vehicle.

0 025 459

Fig. 1

Fig. 2

Fig. 3

Fig. 4

Fig. 5

1

Fig. 6

Fig. 7

Fig. 8

Fig. 9

Fig. 10

2

Fig.11

Fig.12

Fig13

Fig.14